# EUROPEAN PATENT APPLICATION

(11) **EP 2 784 623 A2**
(43) Date of publication of application: **01.10.2014**
(21) Application number: 13199637.3
(22) Date of filing: 27.12.2013
(51) Int. Cl.: G06F 1/16

(54) **Electronic device with touch pen and pen holder**

(30) Priority: 28.03.2013 KR 20130033399
(71) Applicant: Samsung Electronics Co., Ltd, Gyeonggi-do 443-742 (KR)
(72) Inventor: Yoon, Byoung-Uk, Gyeonggi-do (KR); Choi, Jong-Chul, Gyeonggi-do (KR)
(74) Representative: Birchenough, Lewis

(57) **Abstract**

An electronic device is provided. The electronic device includes a hollow body of a touch pen and the touch pen having a head rotatably fixed to the hollow body. The head includes a specific-length fixed shaft and one or more rotation washers through which the shaft passes and which can self-rotate, wherein the fixed shaft includes a magnet having a polarity different from that of a magnetic material disposed in a vicinity of a pen mounting hole for inserting the touch pen of the electronic device, and if the touch pen is abnormally inserted, the head can rotate to a normal insertion location by an attractive force between the magnet and the magnetic material.

## Description

### TECHNICAL FIELD

The present disclosure relates to an electronic device. More particularly, the present disclosure relates to an electronic device having a touch pen.

### BACKGROUND

With the development of multimedia techniques, electronic devices having various functions have recently been introduced. In general, the electronic devices have a convergence function which performs one or more functions in combination.

Further, a mobile terminal which is represented as a so-called 'smart phone' is a popular trend for the electronic devices. In particular, the mobile terminal has a touch-type display module with a large-sized screen, and has a high-definition camera module and thus can capture a still picture and a moving picture, in addition to a typical function such as communication. Further, the mobile terminal can play back multimedia contents such as music, video, etc., and can access a network to perform web surfing. By employing a highly efficient process, the mobile terminal has been gradually evolved to perform various convergence functions at a faster speed, and thus has been remarkably developed to an extent that a main function, i.e., communication with a peer user, is considered merely as an additional function.

As an auxiliary device for using various functions of the electronic device, a touch pen can be installed in such a manner that the touch pen can be located in a mounting hole disposed at a proper place in the electronic device. A user of the electronic device can use the touch pen by removing the touch pen from the electronic device when a display module is manipulated according to a necessity. The touch pen can be formed such that a cross-section thereof is not circular but symmetrical or asymmetrical, and thus can provide convenience of a grabbing operation when the user grabs the touch pen. However, since the touch pen is formed such that the cross-section thereof is not circular, when the touch pen is abnormally inserted to the mounting hole of the electronic device due to user's carelessness, the electronic device can be damaged, or the touch pen has to be completely removed from the electronic device to correctly mount the touch pen again, which causes inconvenience in use.

### SUMMARY

To address the above-discussed deficiencies, it is a primary object to provide an electronic device having a touch pen that can be used without having to concern about an abnormal insertion,

Another aspect of the present disclosure is to provide an electronic device having a touch pen that can be used conveniently.

Another aspect of the present disclosure is to provide an electronic device having a touch pen that can avoid a constraint in designing.

Another aspect of the present disclosure is to provide an electronic device having a touch pen that can prevent the electronic device from being damaged due to an abnormal insertion of the touch pen.

In accordance with an aspect of the present disclosure, an electronic device is provided. The electronic device includes a hollow body of a touch pen, and the touch pen having a head rotatably fixed to the hollow body.

In the aforementioned aspect of the present disclosure, the electronic device further includes a specific-length fixed shaft protruding from the head. The fixed shaft can be installed rotatably by being inserted in a hollow portion of the hollow body.

In addition, one or more magnets can be installed on an outer circumferential surface of the fixed shaft in the same direction as an axial direction. If the magnets are plural in number, a first magnet and the remaining one or more magnets can be installed to have different polarities. The first magnet and the remaining one or more magnets can be disposed in an equiangular manner.

In addition, a pen mounting hole can be formed in the electronic device to mount the touch pen in such a manner that a magnetic material having the same polarity as the remaining one or more magnets is disposed in a vicinity of the pen mounting hole. The magnetic material can be a magnet. The magnetic material can be an electromagnet.

In addition, if the touch pen is normally inserted to the pen mounting hole of the electronic device, the first magnet can be disposed at a corresponding location of a fixed shaft located in the nearest distance to the magnetic material. If the touch pen is abnormally inserted, the remaining one or more magnets can be disposed at a corresponding location of a fixed shaft located in the nearest distance to the magnetic material.

In addition, a magnet mounting hole which is open from a circumferential direction can be formed in the fixed shaft, and a planar magnet having two polarities at the same time can be fixed to the magnet mounting hole.

In addition, a guide protrusion can be formed in a protrusion manner to the magnetic mounting hole in a circumferential direction, and a guide slit for containing the guide protrusion can be formed at a corresponding location of the planar magnet to guide a direction of mounting the planar magnet. The planar magnet can be installed eccentrically to the fixed shaft.

In addition, a pen mounting hole can be formed in the electronic device to mount the touch pen, and a magnetic material having the same polarity as one of polarities of the planar magnet can be disposed in a vicinity of the pen mounting hole.

In addition, the planar magnet can be disposed such that a portion having a polarity different from that of the magnetic material is located in the nearest distance to an outer circumferential surface of the fixed shaft.

In addition, if the touch pen is normally inserted, a portion of the planar magnet disposed in the nearest distance to the outer circumferential surface of the fixed shaft can be disposed at a location nearest to the magnetic material.

In accordance with another aspect of the present disclosure, a touch pen is provided. The touch pen includes a hollow body and a head installed rotatably in the hollow body. The touch pen further includes a specific-length fixed shaft protruding from the head. The fixed shaft can be installed rotatably by being inserted in a hollow portion of the hollow body.

In the aforementioned aspect of the present disclosure, a magnetic material can be disposed in a vicinity of a pen mounting hole to which the touch pen is inserted in an electronic device. Magnets having different polarities can be installed in the fixed shaft to generate an attractive or repulsive force with respect to the magnetic material. Even if the touch pen is abnormally inserted to the pen mounting hole, the head can be automatically rotated by the attractive or repulsive force to guide a normal insertion state.

In accordance with another aspect of the present disclosure, a touch pen is provided. The touch pen includes a hollow body, a head installed rotatably in the hollow body, a specific-length fixed shaft protruding from the head, one or more rotation washers through which the shaft passes, which can self-rotate, and of which an outer circumferential surface is fixed to an inner circumferential surface of the body, a first magnet installed on an outer circumferential surface of the fixed shaft in the same direction as an axial direction, and one or more second magnets installed at different locations in the same manner as the first magnet and having a polarity different from that of the first magnet. If the touch pen is normally inserted to the pen mounting hole of the electronic device, the first magnet can be disposed in a vicinity of the pen mounting hole and can be disposed at a corresponding location of the fixed shaft located in the nearest distance to a magnetic material having a polarity different from that of the first magnet.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGS. 1A to 1D illustrate operation states of a touch pen for a normal insertion case and for an abnormal insertion case according to embodiments of the present disclosure;

FIG. 2 is an exploded perspective view of a touch pen according to embodiments of the present disclosure;

FIG. 3 is a perspective view illustrating part of a head rotation unit of a touch pen according embodiments of the present disclosure;

FIG. 4 is a cross-sectional view illustrating part of a touch pen according to embodiments of the present disclosure;

FIG. 5A and FIG. 5B are cross-sectional views illustrating a state where a touch pen is abnormally inserted in an electronic device according to embodiments of the present disclosure;

FIG. 6A and FIG. 6B are cross-sectional views illustrating a state where an abnormally inserted touch pen rotates by a head rotation unit according to embodiments of the present disclosure;

FIG. 7 is a cross-sectional view illustrating part of a head rotation unit of a touch pen according to embodiments of the present disclosure;

FIG. 8 is a perspective view illustrating part of a head rotation unit of a touch pen according to embodiments of the present disclosure;

FIG. 9 is a perspective view illustrating of a touch pen according to embodiments of the present disclosure; and

FIG. 10 is a perspective view illustrating a state in which a touch pen is normally inserted to an electronic device according to embodiments of the present disclosure.

### DETAILED DESCRIPTION

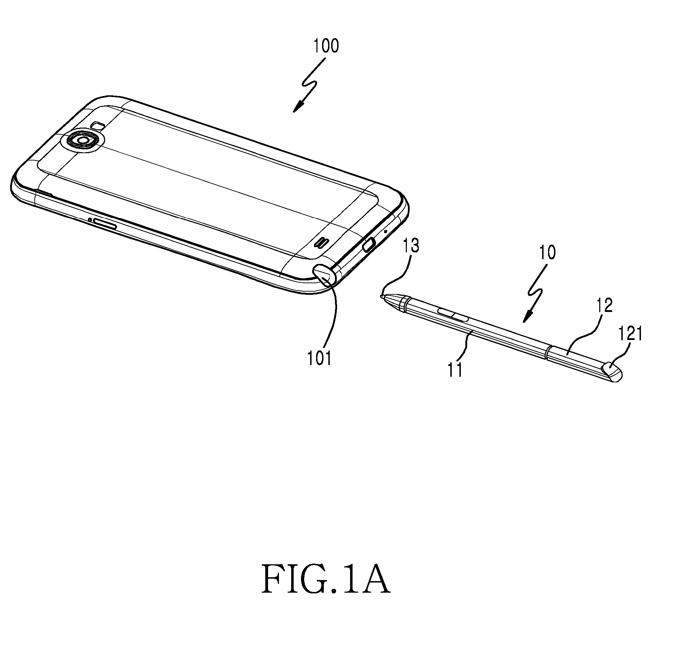

FIGURES 1A through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Embodiments of the present disclosure are described herein below with reference to the accompanying drawings. In the following description, well-known functions or constructions are not described in detail since they would obscure the disclosure in unnecessary detail. Also, the terms used herein are defined according to the functions of the present disclosure. Thus, the terms may vary depending on user's or operator's intention and usage. That is, the terms used herein must be understood based on the descriptions made herein.

Embodiments of the present disclosure include an electronic device which uses a touch screen-type display module configured to perform a display process in a physical screen by using a display unit. In addition, embodiments of the present disclosure can be applied to various electronic devices without being limited only to the electronic device including the touch screen. For one example, the present disclosure can also be applied to an electronic device of which a display unit and an input unit are physically separated and divided.

Although the embodiments of the present disclosure are described as an electronic device which includes a touch screen as a display unit and which uses a touch pen for manipulating the touch screen (such a pen is called a 'stylus pen'), the present disclosure is not limited thereto. For example, various devices that include a touch pen utilized as an input apparatus of a display module can be used as the electronic device, such as a Personal Digital Assistant (PDA), a laptop computer, a mobile phone, a smart phone, a netbook, a Mobile Internet Device (MID), an Ultra Mobile Personal Computer (UMPC), a Tablet Personal Computer (TPC), a navigation device, etc.

FIGS. 1A to 1D illustrate operation states of a touch pen for a normal insertion case and for an abnormal insertion case according to embodiments of the present disclosure.

Referring to FIGS. 1A to 1D, a back side of an electronic device 100 is illustrated. A pen mounting hole 101 disposed to a lower portion of the back side can be provided for a touch pen 10. Although the pen mounting hole 101 is disposed to the lower portion of the electronic device 100, the present disclosure is not limited thereto. For example, the pen mounting hole can be disposed at various locations for allowing a space of the electronic device 100 and configured to contain the touch pen.

The touch pen 10 includes a body 11, a head 12 that is installed rotatably in one end of the body 11, and a tip 13 that is an end portion that sharply protrudes at the other end of the body 11. The tip 13 can be used for inputting data in a contact or non-contact manner to a display module disposed to a front side of the electronic device 100. A stopper member 121 that externally protrudes is formed in the end portion of the head 12. For example, as illustrated in FIG. 1A, if the touch pen 10 is inserted to the pen mounting hole 101 of the electronic device 100 in a normal state (such a state is called a normal insertion state), the stopper member 121 can take a stopper role so that the touch pen 10 is not inserted into the pen mounting hole 101. In general, the stopper member 121 can be inserted up to a depth equal to an outer surface of the electronic device 100 when the touch pen 10 is completely inserted to the pen mounting hole 101 of the electronic device 100. The stopper member 121 of the head 12 can also take a stopper role which is preferable to remove the touch pen 10 from the electronic device 100 by a user in a state where the touch pen 10 is completely inserted to the pen mounting hole 101 of the electronic device 100.

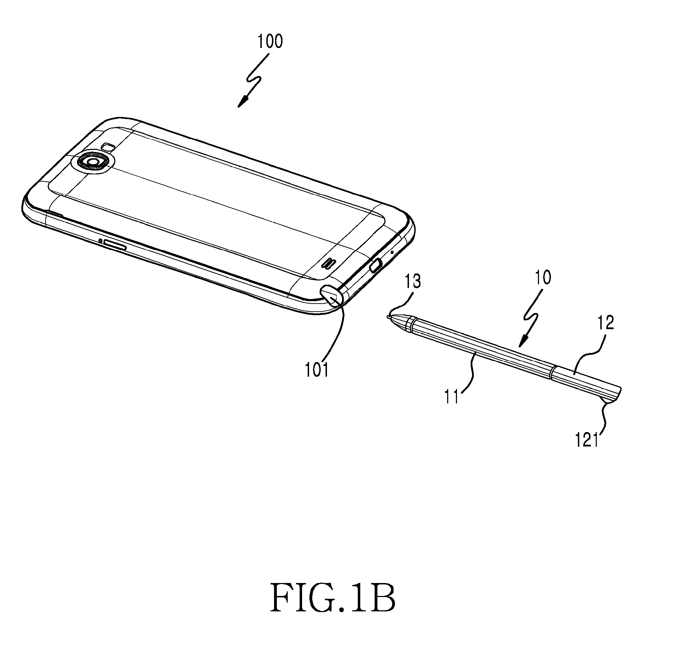

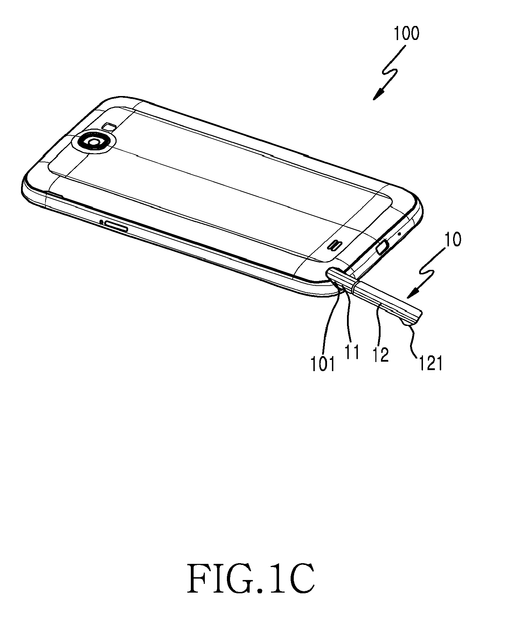

Referring to FIG. 1B and FIG. 1C, unlike the normal insertion state of FIG. 1A, due to user's carelessness, the touch pen 10 can be inserted to the pen mounting hole 101 of the electronic device 100 in a state where the touch pen rotates in an opposite direction (such a case is called an abnormal insertion state).

In general, in order to avoid such an abnormal insertion, the touch pen 10 can be designed to have an asymmetrical cross-section. However, an asymmetrical cross-section can cause an unbalance in an exterior design and a limitation in a designed shape. Therefore, there is a problem in that a design and a structure are restricted. Accordingly, a symmetric polygon or a symmetric cross-section such as an ellipse is used, which can result in not only the normal insertion of FIG. 1A but also the abnormal insertion of FIG. 1B. Even if the abnormal insertion is detected by the user, there can be a troublesome problem in that the touch pen 10 has to be inserted again to the pen mounting hole 101 by rotating the touch pen in a normal direction after completely removing the touch pen from the electronic device 100. In addition, if the touch pen 10 is inserted compulsively to the pen mounting hole 101 of the electronic device 100 in a state where the user fails to detect the abnormal insertion, the stopper member 121 formed in a protrusion manner to the head 12 of the touch pen 10 is unable to be removed since it is compulsively inserted to the pen mounting hole 101, or a case frame of the electronic device may be damaged.

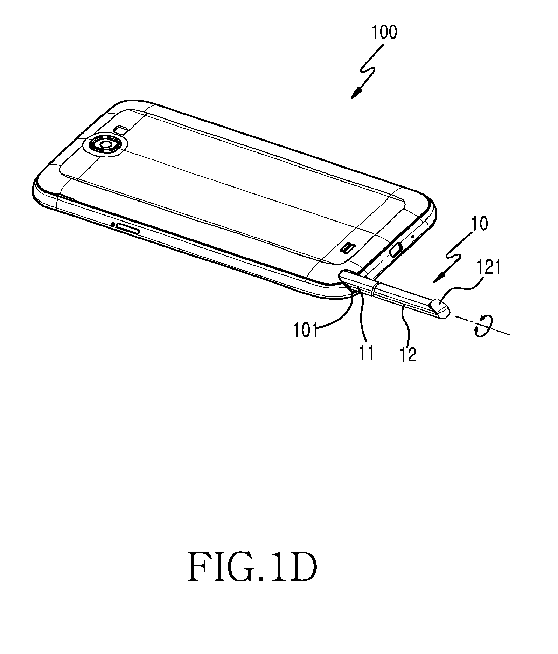

With embodiments of the present disclosure, as illustrated in FIG. 1D, even if the touch pen 10 is abnormally inserted, a normal insertion can be persistently guided by rotating only the head 12 of the touch pen 10 in a normal direction in a state where the touch pen 10 is not completely removed from the electronic device 100. According to certain embodiments, the head 12 of the touch pen 10 can be rotated manually by the user. According to certain embodiments, the head 12 of the touch pen 10 can be configured such that the head 12 automatically rotates in a normal insertion state in a vicinity of the pen mounting hole 101 even in an abnormal insertion case.

Such a state can be implemented by a head rotation unit 15 to be described below.

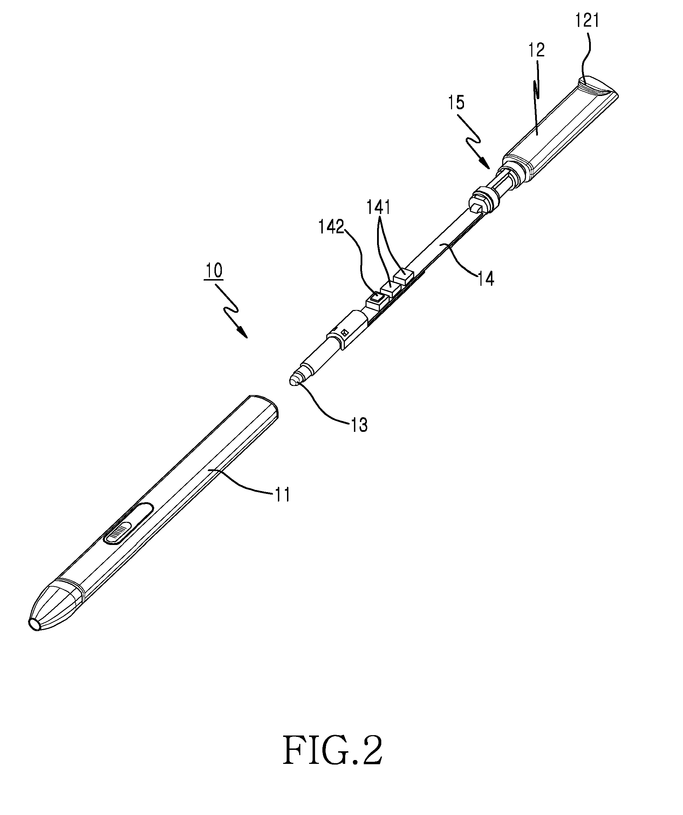

FIG. 2 is an exploded perspective view of a touch pen according to embodiments of the present disclosure.

Referring to FIG. 2, a touch pen 10 has a structure of an electromagnetic induction-type touch pen. Therefore, the electronic device 100 can additionally include a pen touch panel for detecting an oscillation frequency generated in the electromagnetic induction-type touch pen. Such a pen-touch panel can be implemented with a digitizer. However, the present disclosure is not limited thereto, and thus various touch-type touch pens can be applied.

The touch pen 10 can include a body 11 having a specific length and formed in a hollow shape and a head 12 inserted to a hollow portion of the body 11. A stopper member 121 is formed in one end of the head 12 in a protrusion manner, and can be used for easily removing the touch pen 10 from the electronic device 100 by the user at the same time of taking a stopper role to prevent a further proceeding after the touch pen 10 is completely inserted to the pen mounting hole 101 of the electronic device 100. The other end of the head 12 can include a board 14 in which a plurality of electronic function groups 141 and a button 142 are placed and a tip 13 installed in an end portion of the board 14. The board 14 and the tip 13 are inserted to a hollow portion, and when they are completely assembled, the tip 13 protrudes to be exposed to an end portion of the body and thus can be used for touching a display module of the electronic device. Although not shown, a coil material and a magnetic material can be further included between the tip 13 and the board 14, so that an oscillation frequency can be changed by selectively adjusting a distance of the coil material and the magnetic material. Accordingly, various touch input methods can be utilized.

Meanwhile, the head rotation unit 15 can be installed between the board 14 and the head 12 of the touch pen 10 according to embodiments of the present disclosure. The head rotation unit 15 is inserted to the hollow portion of the body 11 together with the board 14, and can be applied in such a manner that the head 12 is rotated in an idle manner in the body 11.

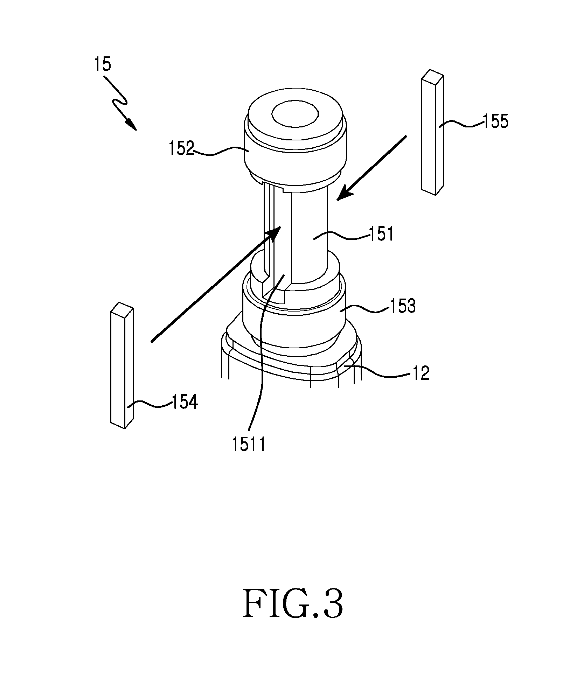

FIG. 3 is a perspective view illustrating part of a head rotation unit of a touch pen according to embodiments of the present disclosure.

Referring to FIG. 3, a head rotation unit 15 can include a fixed shaft 151 which protrudes from or is fixed to a head 12. A pair of rotation washers 152 and 153 can be installed in both ends of the fixed shaft 151. However, the present disclosure is not limited thereto, and thus if a space is allowed, two or more rotation washers can be installed with a specific interval. The rotation washers 152 and 153 can be installed to be supported by the fixed shaft 151 such that a self-rotation is possible in an idle manner. In case of being inserted to the body 11 of the touch pen 10, an outer circumferential surface of the rotation washers 152 and 153 is fixed to an inner circumferential surface of the body 11, and since the rotation washers 152 and 153 can self-rotate about the fixed shaft 151, the head 12 of the touch pen 10 can eventually be installed in the body 11 in a self-rotatable manner. According to certain embodiments, an inner protrusion shape can be provided to an inner surface of the body 11 to avoid a deviation of the rotation washers 152 and 153. According to certain embodiments, a method of indentation, adhesion, etc., can be used in the assembly process for the purpose of fixation and motion avoidance between the inner circumferential surface of the body 11 and the rotation washers 152 and 153. According to certain embodiments, a hardware member can be fixed internally by designing and adding a shape to the rotation washers 152 and 153 since the rotation washers 152 and 153 are fixed inside the body 11 of the touch pen 10. According to certain embodiments, in addition to the rotation washers 152 and 153, a bearing can be applied between the fixed shaft 151 and the inner circumferential surface of the body 11. According to certain embodiments, in order to self-rotate the head 12 in the body 11, a self-assembly structure can be used by excluding an inclusion member such as the rotation washer and the bearing. For example, a stopper apparatus having a hook shape can be provided to a joining portion of any one of the body 11 and the head 12, and a mounting apparatus for mounting the hook onto the remaining one joining portion can be formed between the body 110 and the head 12, so that the head 12 is joined to the body 11 in a snap-fit structure while the head 12 can self-rotate in the body 11.

According to certain embodiments, magnet fixing notches 1511 and 1512 are formed to face with each other in an axial direction along the outer circumferential surface of the fixed shaft 151, and magnets 154 and 155 can be fixed respectively to the magnet fixing notches 1511 and 1512. A pair of the magnets 154 and 155 can be disposed to have different polarities. In doing so, a repulsive force is exerted to the magnet 103 installed in a vicinity of the pen mounting hole 101 of the electronic device 100. More specifically, if the touch pen 10 is normally inserted, the magnets can be disposed such that the first magnet 154 of the fixed shaft 151 and the magnet 103 of the electronic device 100 have an attractive force, and if the touch pen 10 is abnormally inserted, the magnets can be disposed such that the second magnet 155 of the fixed shaft 151 and the magnet 103 of the electronic device 100 have a repulsive force. In this manner, it is possible to guide a rotation of the head 12.

According to certain embodiments, since the magnets 154, 155, and 103 disposed to the fixed shaft 151 and the electronic device 100 include parts having different polarities in one magnet body, if each of the magnets 154, 155, and 103 is disposed to the fixed shaft 151 or the electronic device 100, the magnets are preferably installed such that polarities of the magnets are opposite to each other by considering facing directions of the fixed shaft 151 and the electronic device 100.

According to certain embodiments, it is implemented such that two or more magnets are installed in a fixed shaft in a corresponding manner so as to exert an attractive or repulsive force with respect to a magnet installed in the electronic device. However, the present disclosure is not limited thereto. For example, one magnet can be installed in the fixed shaft so that an attractive force is exerted with respect to a magnet installed in the electronic device, thereby being able to desirably guide a rotation of a head.

According to certain embodiments, it is illustrated and described a structure in which the head 12 automatically rotates while the touch pen 10 is inserted to the pen mounting hole 101 of the electronic device 100 by the plurality of magnets 154 and 155. However, the present disclosure is not limited thereto. For example, only the rotation washers 152 and 153 can be applied so that the head 12 can be rotated manually by the user. According to certain embodiments, a structure can include a helical curve formed on the outer circumferential surface of the fixed shaft 151 so as to be helically inserted to the inner circumferential surface of the body 11.

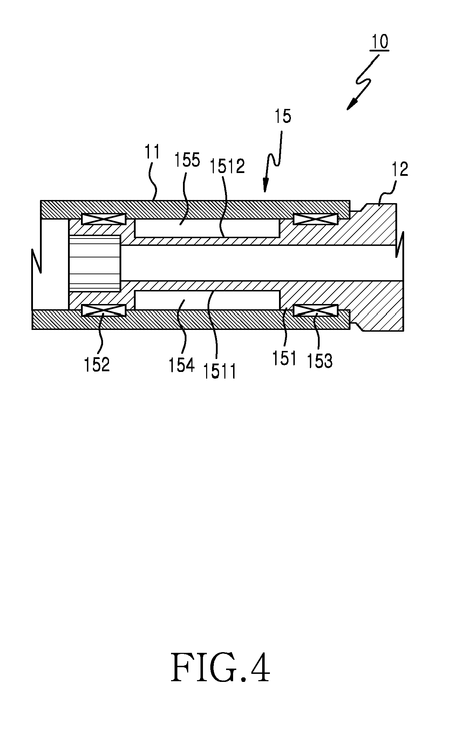

FIG. 4 is a cross-sectional view illustrating part of a touch pen according to embodiments of the present disclosure.

Referring to FIG. 4, if a head 12 of a touch pen 10 is inserted to a hollow portion of a body 11, a fixed shaft 151 can also be inserted to the hollow portion of the body 11. In this case, an outer circumferential surface of a pair of rotation washers 152 and 153 applied rotatably to an outer circumferential surface of the fixed shaft 151 can be fixed in an indentation manner to an inner circumferential surface of the body 11. Therefore, the head 12 can be implemented in a self-rotatable manner with respect to the rotation washers 152 and 153.

A pair of magnets 154 and 155 can be fixed respectively to magnet fixing notches 1511 and 1512 formed on the fixed shaft 151 by using bonding or the like, and can be installed in the body 11 in a flexible manner together with the head 12 and the fixed shaft 151. The magnets 154 and 155 can have different polarities. For example, if the first magnet 154 has a polarity N, it can be implemented such that the second magnet 155 has a polarity S.

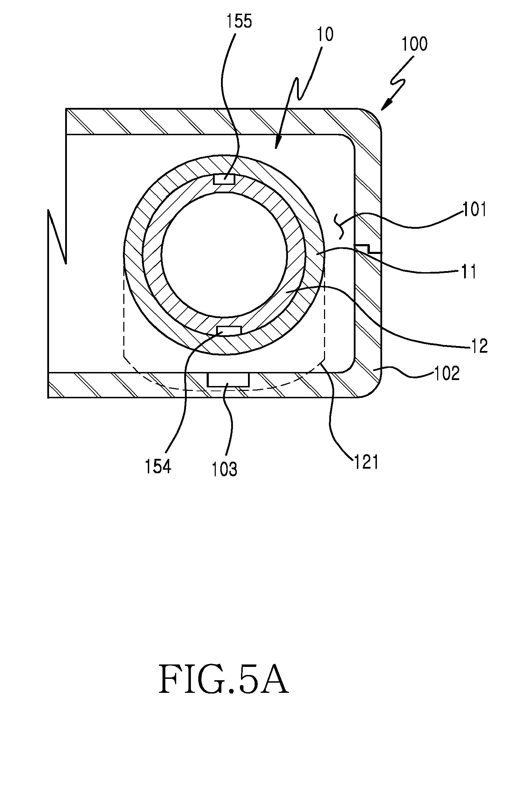

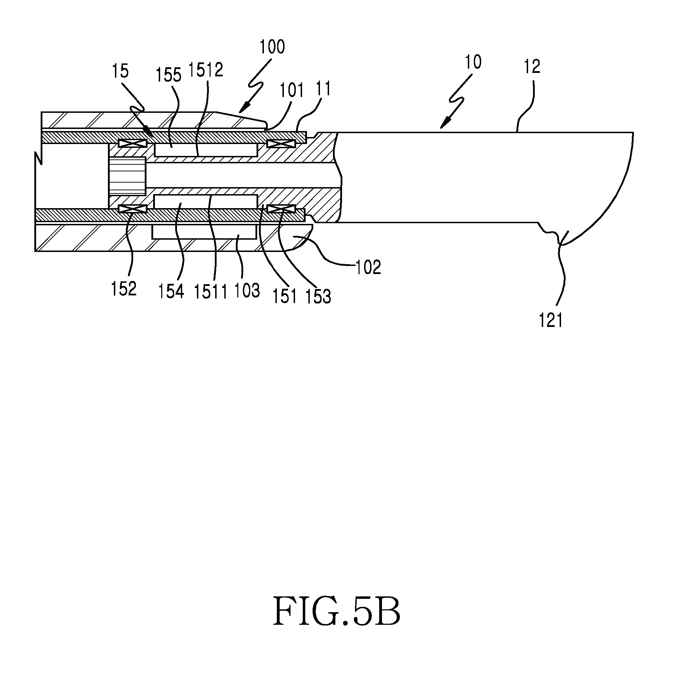

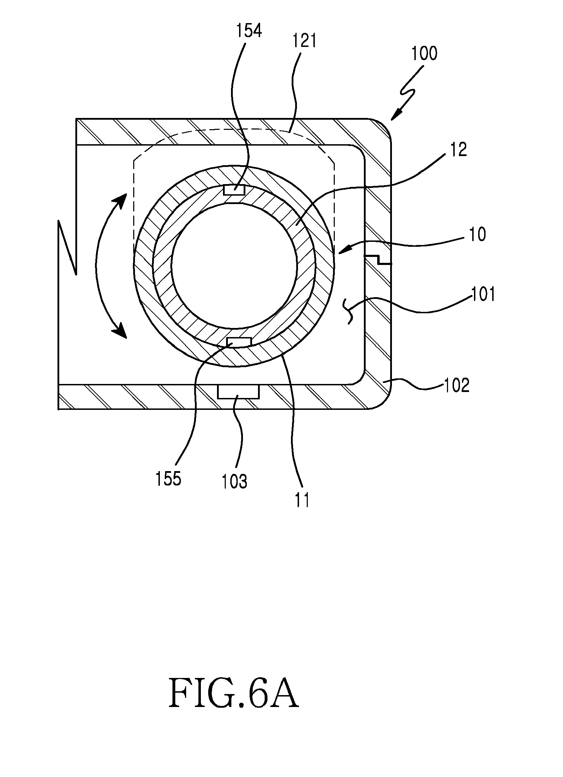

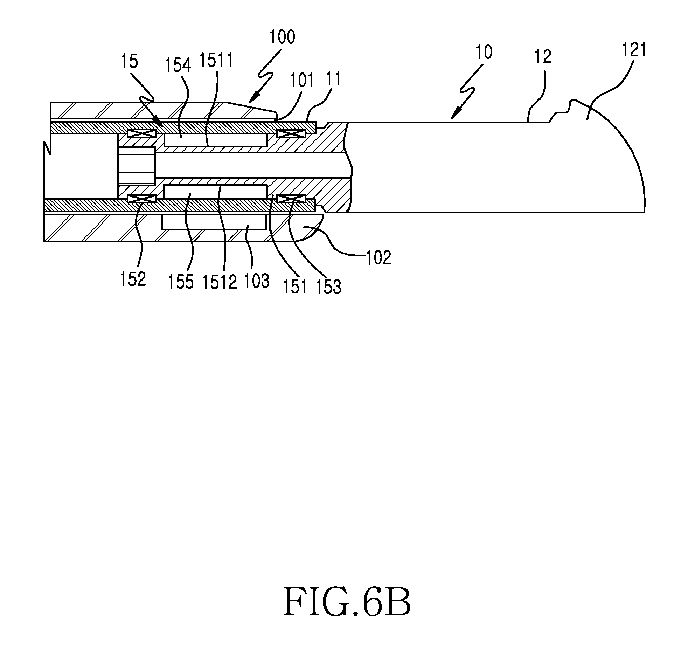

FIG. 5A and FIG. 5B are cross-sectional views illustrating a state where a touch pen is abnormally inserted in an electronic device according to embodiments of the present disclosure. FIG. 6A and FIG. 6B are cross-sectional views illustrating a state where an abnormally inserted touch pen is rotated by a head rotation unit according to embodiments of the present disclosure.

Referring to FIG. 5A and FIG. 5B, a touch pen 10 can be abnormally inserted to a pen mounting hole 101 of an electronic device 100. In this case, a pair of magnets 154 and 155 is installed in a fixed shaft 151 of a head rotation unit 15, and the first magnet 154 can be disposed to face a magnet 103 disposed in a vicinity of the pen mounting hole 101 of the electronic device 100. The first magnet 154 is disposed to have the same polarity as the magnet 103 of the electronic device 100 so that a repulsive force is exerted to each other. On the contrary, the second magnet 155 fixed in a direction facing the first magnet 154 of the fixed shaft 151 can be configured to have a polarity opposite to that of the first magnet 154 and the magnet 103 of the electronic device 100. Therefore, in this state, a repulsive force can be exerted to a head 12 due to the same polarity between the first magnet 154 and the magnet 103 of the electronic device 100, and an attractive force can be exerted between the magnet of the electronic device and the second magnet.

Referring to FIG. 6A and FIG. 6B, since a head 12 of a touch pen 10 can self-rotate, in a case where a head portion is inserted up to a vicinity of a pen mounting hole 101 of an electronic device 100, if it is abnormally inserted as in the case of FIG. 5A and FIG. 5B, a magnet 103 of the electronic device 100 can pull a second magnet 155 having a different polarity while pushing a first magnet 154 having the same polarity. For example, such an operation allows the head 12 to naturally rotate in an arrow direction of FIG. 6A, and eventually as illustrated in FIG. 6B, the second magnet 155 of the touch pen 10 can be properly aligned to a location corresponding to the magnet 103 of the electronic device 100, that is, to a state where the touch pen 10 is normally inserted.

According to certain embodiments, as illustrated, the magnet 103 of the electronic device 100 is fixed to a case frame 102 in a vicinity of the pen mounting hole of the electronic device 100. However, the present disclosure is not limited thereto. For example, the magnet 103 of the electronic device 100 can be installed at any location corresponding to the pair of magnets 154 and 155 installed in the fixed shaft 151 while the touch pen 10 is inserted. Although a magnet having a specific magnetic force is disposed to an electronic device according to certain embodiments, it is also possible to dispose an electromagnet. A magnetic force of the electromagnet can be adjusted in strength by adjusting an electric current applied to the electromagnet.

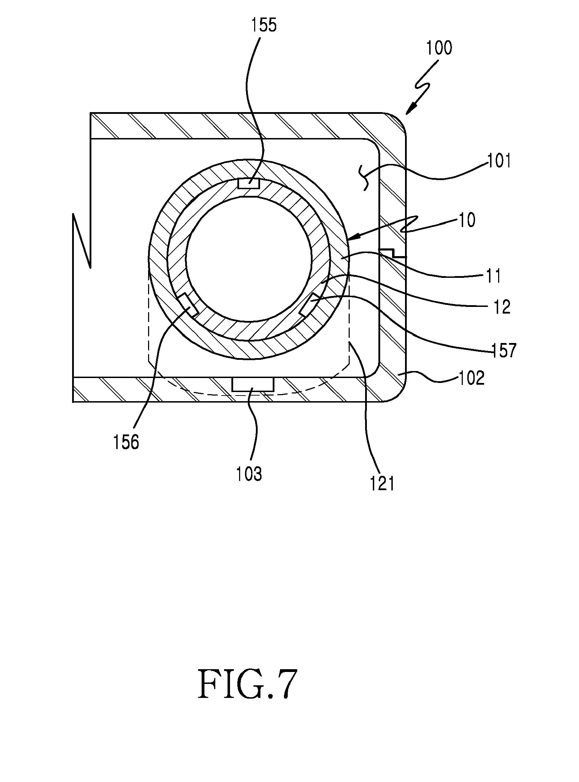

FIG. 7 is a cross-sectional view illustrating part of a head rotation unit of a touch pen according to embodiments of the present disclosure.

In certain embodiments, only the first magnet 154 is applied. The first magnet 154 has the same polarity as the magnet 103 of the electronic device 100 and is used to rotate the head 12 when a repulsive force is exerted. Referring to FIG. 7, two magnets 156 and 157 which have the same polarity as the magnet 103 of the electronic device 100 and which generate the repulsive force can be installed with a specific interval. In this case, the magnets 156 and 157 which generate the repulsive force can be disposed to have a specific angle from a location of installing a magnet 155 for generating an attractive force with respect to the magnet 103 of the electronic device 100 to guide a normal insertion of the touch pen 10. In certain embodiments, as illustrated in FIG. 7, the three magnets 155, 156, and 157 are preferably disposed in an identical angle (in this case, 120 degrees). However, the present disclosure is not limited thereto, and thus three or more magnets can be disposed to the fixed shaft 151 in an equiangular manner.

According to certain embodiments, if the magnets 156 and 157 disposed on an outer circumferential surface of the fixed shaft 151 of the head 12 and for generating the repulsive force are installed in plural numbers, a repulsive force is naturally generated with respect to the magnet 103 of the electronic device 100, which can be more advantageous to guide the magnet 155 for generating the repulsive force.

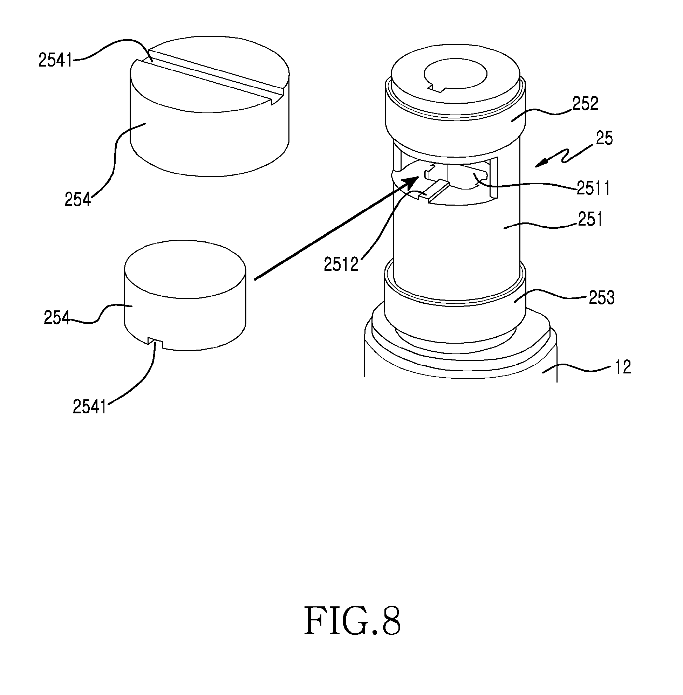

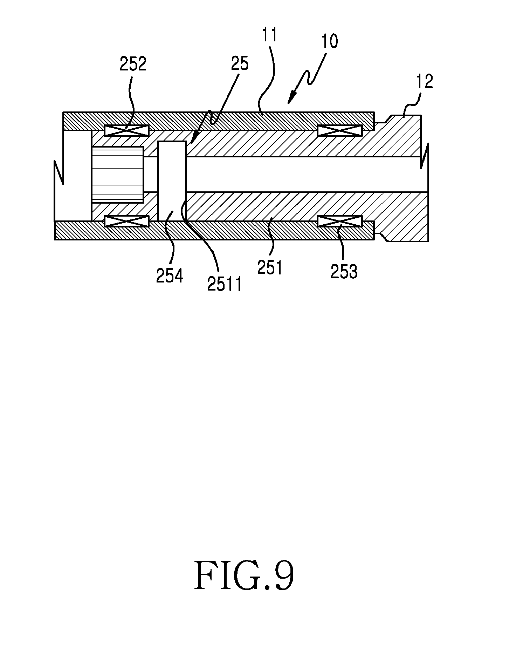

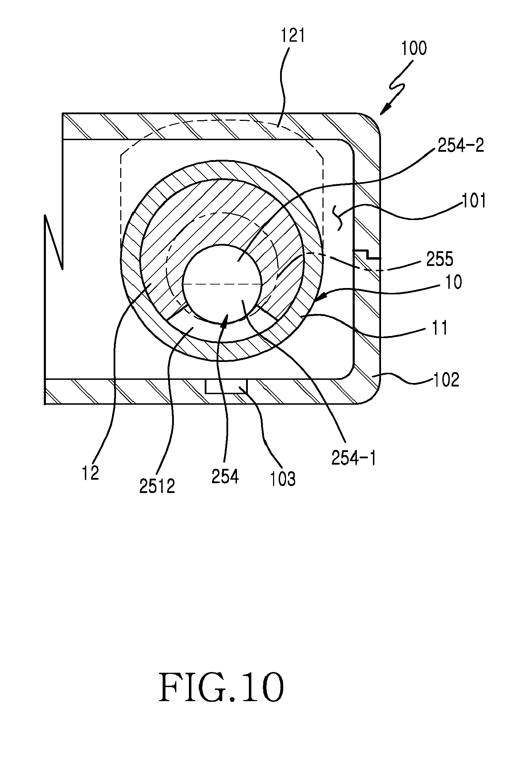

FIG. 8 is a perspective view illustrating part of a head rotation unit 25 of a touch pen according to embodiments of the present disclosure. FIG. 9 is a perspective view illustrating part of a touch pen according to embodiments of the present disclosure. FIG. 10 is a perspective view illustrating a state in which a touch pen is normally inserted to an electronic device according to embodiments of the present disclosure.

Referring to FIG. 8 and FIG. 9, a planar magnet 254 can be disposed to a fixed shaft 251 of a head 12 not in an axial direction but in a direction orthogonal to the axial direction (i.e., in a circumferential direction). In certain embodiments, since the planar magnet 254 has two polarities in one magnet, it may not be necessary to apply at least two magnets for another polarity. According to certain embodiments, the planer magnet 254 has a half-moon shape in general and has a different polarity, and thus a surface of each polarity can be designed according to a polarity. According to certain embodiments, a pair of rotation washers 252 and 253 can be installed in the fixed shaft 251. According to certain embodiments, a magnet mounting hole 2511 which is open from an outer circumferential surface and of which a cross-section has a circular shape can be formed in the fixed shaft 251 in a circumferential direction, and the planar magnet 254 can be placed in the magnet mounting hole 2511. A guide protrusion 2512 can be formed at a proper place on an inner circumferential surface in the magnet mounting hole 2511, and a guide slit 2541 is formed at a location corresponding to the planar magnet 254. Thus, the planar magnet 24 can be disposed to the magnet mounting hole 2511 to have a directivity in such a manner that the guide protrusion 2512 is guided to the guide slit 2541. According to certain embodiments, such a structure can not only avoid a self-rotation of the planer magnet 254 to prevent a polarity from being modified arbitrarily but also improve an assembly capability. According to certain embodiments, a guide slit can be formed in the magnet mounting hole 2511 and a guide protrusion can be formed in the planar magnet 254 in a protrusion manner, so that the guide protrusion is guided to the guide slit.

As illustrated in FIG. 9, a planar magnet 254 is disposed eccentrically when viewed from a transverse section of the fixed shaft 251. According to certain embodiments, the planar magnet 254 installed in the fixed shaft 251 is configured so that different polarities are exerted centrically to a center line. Therefore, a polarity different from that of the magnet 103 of the electronic device 100, that is, a polarity for generating an attractive force, is preferably disposed in a direction most similar to that of a body located in an outermost portion.

Referring to FIG. 10, a first portion 254-1 of a planar magnet 254 is disposed in the nearest distance to a magnet 103 of an electronic device 100, and in this case, can be configured to have a different polarity in a state where a touch pen 10 is normally inserted. Accordingly, a second portion 254-2 of the planar magnet 254 can be configured to have the same polarity as the magnet 103 of the electronic device 100.

According to certain embodiments, the planar magnet 254 is applied in various sizes so that attractive and repulsive forces with different strengths can be provided without having to add an additional magnet. According to certain embodiments, it is also be possible to apply a planar magnet 255 having a greater diameter.

According to embodiments of the present disclosure, a User Interface (UI) of an electronic device can be modified by utilizing the same structure described above. According to certain embodiments, an insertion and a removal of a touch pen can be detected by disposing a power detection device to a corresponding location in the electronic device and by detecting a magnetic power of a magnet installed in the touch pen. According to such detection information, the electronic device can properly change and use the UI. According to certain embodiments, in a default case, the electronic device can automatically switch to a note mode if it is detected that the touch pen is removed from the electronic device. In case of receiving a message, the electronic device can automatically switch to a reply mode if it is detected that the touch pen is removed from the electronic device. In case of capturing a picture or a video, the electronic device can automatically switch to an edit mode if it is detected that the touch pen is removed from the electronic device. In case of using the Internet, the electronic device can automatically switch to a capture mode if it is detected that the touch pen is removed from the electronic device.

According to certain embodiments, a magnetic force can be detected with a hall sensor, a reed switch, etc., disposed at a location configured to detect a magnetic force of a magnet included in a touch pen.

While the present disclosure has been particularly shown and described with reference to embodiments thereof, it will be understood by those skilled in the art that various changes in form and details may be made therein without departing from the spirit and scope of the present disclosure as defined by the appended claims.

## Claims

1. An electronic device (100) including a touch pen (10) , wherein the touch pen (10) comprises:
a hollow body (11); and
a head (12) rotatably fixed to the hollow body (11).

2. The electronic device of claim 1, further comprising a specific-length fixed shaft protruding from the head, wherein the fixed shaft is installed rotatably by being inserted in a hollow portion of the hollow body.

3. The electronic device of claim 2, wherein one or more magnets are installed on an outer circumferential surface of the fixed shaft.

4. The electronic device of claim 3, wherein if the magnets are plural in number, a first magnet and the remaining one or more magnets are installed to have different polarities.

5. The electronic device of claim 4, wherein the first magnet and the remaining one or more magnets are disposed in an equiangular manner.

6. The electronic device of claim 4, wherein a pen mounting hole is formed in the electronic device to mount the touch pen in such a manner that a magnetic material having the same polarity as the remaining one or more magnets is disposed in a vicinity of the pen mounting hole.

7. The electronic device of claim 6, wherein the magnetic material is a magnet or an electromagnet.

8. The electronic device of claim 6, wherein if the touch pen is normally inserted to the pen mounting hole of the electronic device, the first magnet is disposed at a corresponding location of a fixed shaft located in the nearest distance to the magnetic material.

9. The electronic device of claim 6, wherein if the touch pen is abnormally inserted, the remaining one or more magnets are disposed at a corresponding location of a fixed shaft located in the nearest distance to the magnetic material.

10. The electronic device of claim 2, wherein a magnet mounting hole which is open from a circumferential direction is formed in the fixed shaft, and a planar magnet having two polarities at the same time is fixed to the magnet mounting hole.

11. The electronic device of claim 10, wherein a guide protrusion is formed in a protrusion manner to the magnetic mounting hole in a circumferential direction, and a guide slit for containing the guide protrusion is formed at a corresponding location of the planar magnet to guide a direction of mounting the planar magnet.

12. The electronic device of claim 11, wherein the planar magnet is installed eccentrically to the fixed shaft.

13. The electronic device of claim 12, wherein a pen mounting hole is formed in the electronic device to mount the touch pen, and a magnetic material having the same polarity as one of polarities of the planar magnet is disposed in a vicinity of the pen mounting hole.

14. The electronic device of claim 15, wherein the planar magnet is disposed such that a portion having a polarity different from that of the magnetic material is located in the nearest distance to an outer circumferential surface of the fixed shaft.

15. The electronic device of claim 14, wherein if the touch pen is normally inserted, a portion of the planar magnet disposed in the nearest distance to the outer circumferential surface of the fixed shaft is disposed at a location nearest to the magnetic material.
